Europäisches Patentamt

(19) European Patent Office

Office européen des brevets

(11) Veröffentlichungsnummer : **0 027 876**
**B1**

(12) # EUROPÄISCHE PATENTSCHRIFT

(45) Veröffentlichungstag der Patentschrift :
24.08.83

(21) Anmeldenummer : **80105180.6**

(22) Anmeldetag : **30.08.80**

(51) Int. Cl.³ : **B 65 B 35/30, B 65 G 47/52**

(54) **Vorrichtung zum Gruppieren von Verpackungseinheiten.**

(30) Priorität : **19.10.79 DE 2942254**

(43) Veröffentlichungstag der Anmeldung :
**06.05.81 Patentblatt 81/18**

(45) Bekanntmachung des Hinweises auf die Patenterteilung : **24.08.83 Patentblatt 83/34**

(84) Benannte Vertragsstaaten :
**AT DE FR GB IT NL SE**

(56) Entgegenhaltungen :
**DE A 1 955 937**
**GB A 1 168 581**
**US A 4 039 073**

(73) Patentinhaber : **Herzberger Papierfabrik Ludwig**
**Osthushenrich GmbH & Co KG**
**Andreasberger Strasse 1 Postfach 1169**
**D-3420 Herzberg/Harz (DE)**

(72) Erfinder : **Sammet, Rolf-Hermann**
**Knollenstrasse 49**
**D-3420 Herzberg/Harz (DE)**

(74) Vertreter : **Gramm, Werner, Dipl.-Ing. et al**
**Patentanwälte Gramm + Lins Theo-**
**dor-Heuss-Strasse 2**
**D-3300 Braunschweig (DE)**

EP 0 027 876 B1

« Vorrichtung zum Gruppieren von Verpackungseinheiten »

Die Erfindung betrifft eine Vorrichtung zum Gruppieren von bereits für sich verpackten Verpackungseinheiten für ein größeres Transportgebinde, in dem mehrere Verpackungseinheiten nebeneinander angeordnet sind, mit einem am Ende einer die Verpackungseinheiten einzeln vorfördernden Förderstrecke umlaufenden Band, das die Verpackungseinheiten mit an dem Band befestigten Platten von der Förderstrecke abtransportiert und aus dem eine vorbestimmte Anzahl senkrecht zur Bandvorschubrichtung in derselben Förderebene herausbewegt und auf einem Abförderband abtransportiert werden.

Bei einer bekannten derartigen Verpackungsmaschine laufen die Verpackungseinheiten gegen das auf ihrer Höhe angeordnete umlaufende Band in ein durch zwei Platten gebildetes Fach ein. Dieses Band befindet sich am Ende der Förderstrecke und weist dort eine Umlenkrolle auf, so daß die Platten zur Verpackungseinheit hin schräggestellt sind, wodurch die Verpackungseinheit in das Fach leicht einlaufen kann. Von der Verpackungseinheit aus gesehen sind die Platten an ihrem hinteren Ende mit dem umlaufenden Band verbunden. Die von einer der Platten geschobene Verpackungseinheit durchläuft die Umlenkstrecke des umlaufenden Bandes und gelangt dann auf eine etwa geradlinige Strecke. Dort laufen die Verpackungseinheiten nebeneinander auf ein Transportband auf, das intermittierend ruckartig angetrieben wird. Wenn sich eine ausreichende Anzahl von Verpackungseinheiten auf dem senkrecht zu der geraden Strecke ausgerichteten Transportband befindet, wird dieses ruckartig angetrieben, wodurch die Verpackungseinheiten aus den durch die Platten gebildeten Fächern heraus transportiert werden. Senkrecht zu dem Transportband steht das Abförderband, auf das die Verpackungseinheiten durch den kurzzeitigen Antrieb des Transportbandes beschleunigt werden. Auf dem Abförderband steht dann die gewünschte Anzahl von Verpackungseinheiten nebeneinander, wodurch eine Gruppe gebildet ist, die in das größere Transportgebinde eingepackt werden kann.

Die bekannte Verpackungsmaschine weist eine Reihe von Nachteilen auf, die insbesondere dann sehr gravierend sind, wenn eine hohe Verpackungsgeschwindigkeit erzielt werden soll. Durch die Umlenkung der Verpackungseinheiten auf dem umlaufenden Band erhalten diese eine Zentrifugalbeschleunigung und können sich bei einer hohen Verpackungsgeschwindigkeit, wodurch auch eine hohe Geschwindigkeit des umlaufenden Bandes erforderlich ist, aus den durch die Platten gebildeten Fächern herausbewegen. Darüber hinaus sind die durch das Transportband auf das Abförderband beschleunigten Verpackungseinheiten zwar dicht nebeneinander angeordnet, aber mit ihren Stirnseiten nicht in Längsrichtung des Abförderbandes ausgerichtet. Es ist daher ein weiterer Arbeitsgang erforderlich, um die einzelnen Verpackungseinheiten zueinander auszurichten.

Durch die deutsche Offenlegungsschrift 19 55 937 ist eine Verpackungsmaschine bekannt, bei der die auf einem Transportband vorgeförderten, verpackten Waren durch ein mit Platten aufgebautes, umlaufendes Band senkrecht zu dem Förderband abgenommen werden. Die Platten des umlaufenden Bandes hängen bei ihrer Förderfunktion nach unten und streichen über einen Boden, über den die verpackte Ware durch die Platten geschoben wird. Wenn sich auf diese Weise eine vorbestimmte Anzahl der verpackten Waren nebeneinander befinden, wird der Boden zur Seite geschoben, so daß die Waren nebeneinander liegend in das größere Transportgebinde fallen. Ersichtlich ist diese Gruppiereinrichtung nur für Waren verwendbar, die über eine gewisse Strecke frei fallen dürfen, was im allgemeinen nicht der Fall ist. Außerdem ist es nachteilig, daß bei dieser Gruppiereinrichtung nicht ausschließlich kontinuierlich angetriebene Teile verwendet werden, da der Boden immer nach einer gewissen Zeit und genau synchronisiert weggezogen werden muß.

Durch die US-Patentschrift 4 039 073 ist eine Ausstoßvorrichtung bekannt, die aus einer mit einer Parallelogrammführung bewegten Stange besteht. An der Stange laufen einzeln vorgeförderte Flaschen vorbei. Die Länge der Stange entspricht der vorbestimmten Anzahl der Flaschen, die mit Hilfe der als Austoßvorrichtung wirkenden Stange senkrecht zur Förderrichtung des Förderbandes auf ein Abförderband gestoßen werden. Bei der Ausstoßbewegung bewegt sich die Stange, verursacht durch die Parallelogrammführung, sowohl senkrecht zur Förderrichtung des Förderbandes als auch in Förderrichtung des Förderbandes, um den nachfolgend vorgeförderten Flaschen auszuweichen. Nach dem Ausstoßorgan kehrt die Stange in ihre Ausgangsstellung zurück und ruht dort, bis wieder eine vorbestimmte Anzahl von Flaschen in den Bereich der Stange vorgefördert worden ist. Die Ausstoßvorrichtung arbeitet daher intermittierend. Im Vergleich zur Fördergeschwindigkeit der Flaschen findet die Ausstoßbewegung mit einer hohen Geschwindigkeit statt, so daß sich die Anordnung nicht für eine hohe Vorfördergeschwindigkeit der Flaschen eignet, da die dann erforderliche Geschwindigkeit für die Ausstoßvorrichtung ein zuverlässiges Arbeiten der Vorrichtung nicht mehr erlaubt. Die Flaschen werden durch die Ausstoßbewegung nicht kontrolliert vorgefördert, sondern auf das Abförderband gestoßen, so daß eine anschließende Ausrichtung der gruppierten Flaschen erforderlich ist.

Der Erfindung liegt demgegenüber die Aufgabe zugrunde, eine Vorrichtung zum Gruppieren von Verpackungseinheiten der eingangs erwähnten Art zu erstellen, bei der die Verpackungseinheiten jederzeit kontrolliert bewegt werden, so daß eine hohe Verpackungsgeschwindigkeit realisiert werden kann.

Diese Aufgabe wird erfindungsgemäß mit einer Vorrichtung gelöst, die die folgenden Merkmale aufweist :

a) Das umlaufende Band ist oberhalb der vorgeförderten Verpackungseinheiten angeordnet ;

b) die Platten fördern nach unten zeigend die Verpackungseinheiten von der Förderstrecke ;

c) zwischen den Platten und einem unterhalb der Platten befindlichen, die Verpackungseinheiten tragenden Boden befindet sich ein Zwischenraum ;

d) das Abförderband verläuft winkelig zur Bewegungsrichtung der Platten ;

e) von der dem Abförderband abgewandten Seite der Platten läuft eine Ausschubstange in den Zwischenraum und schiebt die Verpackungseinheiten auf das Abförderband ;

f) das umlaufende Band und die Ausschubstange sind kontinuierlich angetrieben ;

g) das Ende der Ausschubstange weist während des Ausschiebens der Verpackungseinheiten zu dem wirksamen Teil des umlaufenden Bandes in dessen Längsrichtung praktisch keine Relativgeschwindigkeit auf.

Bei der erfindungsgemäßen Vorrichtung werden die Verpackungseinheiten in jeder Phase kontrolliert geführt und sauber zueinander ausgerichtet auf das Abförderband gebracht. Eine gesonderte Ausrichtung der gruppierten Verpackungseinheiten entfällt daher. Bei der kontrollierten Ausschiebebewegung durch die Ausschubstange werden die Verpackungseinheiten gleichzeitig ausgerichtet. Da die Verpackungseinheiten aus den durch die Platten gebildeten Fächern nicht durch eine kurzzeitige Beschleunigung und unter Ausnutzung ihrer Trägheitskraft heraus und auf das Abförderband bewegt werden, sondern in einer kontrollierten Bewegung durch die Ausschubstange aus den Fächern herausgeschoben werden, läßt sich eine hohe Verpackungsgeschwindigkeit realisieren, ohne daß hierbei Schwierigkeiten auftreten. Dabei wird ein völlig kontinuierlicher Ablauf der Gruppier- und Ausschiebebewegung dadurch erreicht, daß die Ausschubstange während des Ausschiebens der Verpackungseinheiten zur dem wirksamen Teil des umlaufenden Bandes in dessen Längsrichtung praktisch keine Relativgeschwindigkeit aufweist. Die Ausschubstange wird mit anderen Worten während des Ausschiebens kontinuierlich eingezogen, und zwar in dem Maße, wie sich die Platten auf die Ausschubstange zubewegen.

In einer vorteilhaften Ausführungsform, die sich besonders einfach realisieren läßt, weisen die Ausschubstangen eine konstante Länge auf, sind auf einem parallel zu dem Abförderband ausgerichteten, umlaufenden Band angeordnet und während des Ausschiebens auf einer zur Vorschubrichtung des Abförderbandes schrägen, von dem umlaufenden Band wegzeigenden Geraden geführt. Die Veränderung der wirksamen Länge der Ausschubstange geschieht daher nicht durch eine reale Längenänderung der Ausschubstange, sondern durch ein Zurückziehen der gesamten Stange in der Halterung.

In gleicher Weise kann die Ausschubstange vor den Platten auf einer auf das umlaufende Band zu zeigenden Geraden geführt sein, um aus der ganz eingezogen in die ganz ausgeschobene Stellung zu gelangen. Dabei ist es möglich, die Schräge der die Ausschubstange führenden Geraden zu verändern, und somit die effektive Länge der Ausschubstange zu variieren. Alternativ kann aber auch die Länge der Ausschubstange selbst einstellbar sein. Durch die wirksame Länge der Ausschubstange wird bei gleicher Geschwindigkeit des umlaufenden Bandes die Anzahl der in das größere Transportgebinde verpackten Verpakkungseinheiten bestimmt.

Damit die gruppierten Verpackungseinheiten sofort in das Transportgebinde eingefahren werden können, ist es vorteilhaft, wenn der Abstand zwischen den parallel zueinander hängenden Platten genau der Breite der Verpackungseinheiten entspricht, so daß zwischen denen praktisch kein Zwischenraum verbleibt, da die Platten sehr dünn gehalten werden können.

Das Einfahren der Verpackungseinheiten in das erfindungsgemäß ausgebildete umlaufende Band wird dadurch erleichtert, daß die Verpackungseinheiten in den Bereich des umlaufenden Bandes dort einlaufen, wo die sie von der Förderstrecke herunterfördernde Platte durch die Umlenkung am Ende des umlaufenden Bandes noch schräggestellt ist. Das für die einlaufende Verpackungseinheit durch die beiden Platten gebildete Fach ist durch die Schrägstellung der einen Platte noch erheblich größer als die Breite der Verpackungseinheit, trotzdem wirkt auf die Verpakkungseinheit keine Zentrifugalkraft ein.

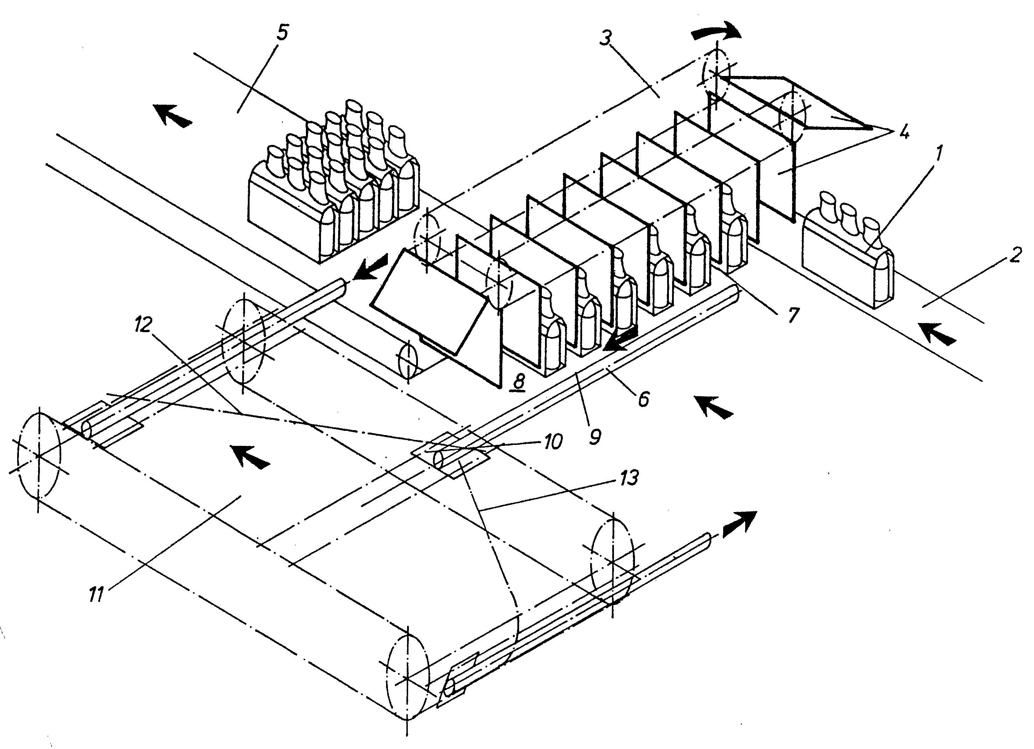

Die Erfindung soll im folgenden anhand eines in der Zeichnung dargestellten Ausführungsbeispiels näher erläutert werden.

Die Zeichnung zeigt den prinzipiellen Aufbau einer erfindungsgemäßen Verpackungsmaschine. Verpackungseinheiten 1 werden einzeln nacheinander auf einer Förderstrecke 2 vorgefördert. Senkrecht zu der Förderstrecke 2 und oberhalb der Verpackungseinheiten 1 läuft eine umlaufendes Band 3, an dem Platten 4 in einem Abstand voneinander befestigt sind, der genau der Breite der Verpackungseinheiten 1 entspricht. Die Verpackungseinheiten 1 laufen in den Zwischenraum zwischen zwei Platten an einem Ende des umlaufenden Bandes 3 ein, so daß eine der Platten durch die Umlenkung noch schräg steht und dadurch der Zwischenraum zwischen den Platten 4 für die Verpackungseinheit beim Einlaufen größer ist als die Breite der Verpackungseinheit 1. Durch eine der Platten 4 wird die Verpackungseinheit 1 von dem Förderweg 2 heruntergeschoben und in Vorschubrichtung des umlaufenden Bandes 3 senkrecht zu der Förderstrecke 2 bewegt (von dem umlaufenden Band 3 sind aus Gründen der Übersichtlichkeit der Zeichnung nur diejenigen Platten 4 dargestellt, die sich auf der unteren Seite befinden).

In dem dargestellten Ausführungsbeispiel werden je fünf Verpackungseinheiten 1 nebeneinander gruppiert und auf ein Abförderband 5 transportiert. Dies geschieht mit Hilfe einer Ausschubstange 6, die in den Zwischenraum 7 zwischen den herunterhängenden Platten 4 und einem die Verpackungseinheiten 1 tragenden Boden 8 einfährt. Die auf die Verpackungseinheiten 1 zeigende Kante 9 der Ausschubstange 6 richtet die Verpackungseinheiten 1, die in den durch die Platten 4 gebildeten Fächern zueinander etwas versetzt sein können, aus. Die Länge der Ausschubstange 6 ist so gewählt, daß im dargestellten Beispiel fünf Verpackungseinheiten 1 durch die Ausschubstange 6 berührt werden.

Die Ausschubstange 6 ist mit einer Halterung 10 an einem endlos umlaufenden Band 11 befestigt. Beim Ausschieben der Verpackungseinheiten bewegt sich die Halterung 10 auf dem Band 11 auf einer Geraden 12 von dem umlaufenden Band 3 weg. Dadurch verkürzt sich die für das Ausschieben wirksame Länge der Ausschubstange 6 in dem Maße, wie die Verpackungseinheiten 1 durch die Platten 4 des umlaufenden Bandes 3 geschoben werden. Dadurch ist gewährleistet, daß während des Ausschiebens nur die fünf gewünschten Verpackungseinheiten 1 durch die Ausschubstange 6 berührt werden und keine Kollision mit anderen Verpackungseinheiten 1 eintritt.

Die am Ende des umlaufenden Bandes 11 vollständig eingezogene Ausschubstange 6 wird vor den Verpackungseinheiten 1 auf einer entgegengesetzt geneigten Geraden 13 wieder ausgefahren, so daß sie ihre maximal wirksame Länge kurz vor den Verpackungseinheiten 1 aufweist.

Zur Umstellung der Verpackungsmaschine auf Transportverpackungen mit beispielsweise vier oder sechs nebeneinander angeordneten Verpackungseinheiten 1 muß lediglich die wirksame Länge der Ausschubstange 6 verstellt werden, die hierfür vorzugsweise längenverstellbar ausgeführt ist. In dem dargestellten Ausführungsbeispiel ist eine Mehrzahl von Ausschubstangen 6 vorgesehen, wobei die nächste Ausschubstange 6 auf die nachfolgenden Verpackungseinheiten 1 aufläuft, wenn die vorhergehende praktisch vollständig eingezogen ist.

## Ansprüche

1. Vorrichtung zum Gruppieren von bereits für sich verpackten Verpackungseinheiten (1) für ein größeres Transportgebinde, in dem mehrere Verpackungseinheiten (1) nebeneinander angeordnet sind, mit einem am Ende einer die Verpackungseinheiten (1) einzeln vorfördernden Förderstrecke (2) umlaufenden Band (3), das die Verpackungseinheiten (1) mit an dem Band (3) befestigten Platten (4) von der Förderstrecke (2) abtransportiert und aus dem eine vorbestimmte Anzahl senkrecht zur Bandvorschubrichtung in derselben Förderebene herausbewegt und auf einem Abförderband (5) abtransportiert werden, gekennzeichnet durch die folgenden Merkmale :

a) Das umlaufende Band (3) ist oberhalb der vorgeförderten Verpackungseinheiten (1) angeordnet ;

b) die Platten (4) fördern nach unten zeigend die Verpackungseinheiten (1) von der Förderstrecke (2) ;

c) zwischen den Platten (4) und einem unterhalb der Platten (4) befindlichen, die Verpackungseinheiten (1) tragenden Boden (8) befindet sich ein Zwischenraum (7) ;

d) das Abförderband (5) verläuft winkelig zur Bewegungsrichtung der Platten (4) ;

e) von der dem Abförderband (5) abgewandten Seite der Platten (4) läuft eine Ausschubstange (6) in den Zwischenraum (7) und schiebt die Verpackungseinheiten (1) auf das Abförderband (5) ;

f) das umlaufende Band (3) und die Ausschubstange (6) sind kontinuierlich angetrieben ;

g) das Ende der Ausschubstange (6) weist während des Ausschiebens der Verpackungseinheiten (1) zu dem wirksamen Teil des umlaufenden Bandes (3) in dessen Längsrichtung praktisch keine Relativgeschwindigkeit auf.

2. Vorrichtung nach Anspruch 1, dadurch gekennzeichnet, daß die Ausschubstange (6) eine konstante Länge aufweist, auf einem parallel zu dem Abförderband (5) ausgerichteten, umlaufenden Band (11) angeordnet ist und während des Ausschiebens auf einer zur Verschieberichtung des Abförderbandes (5) schrägen, von dem umlaufenden Band (3) wegzeigenden Geraden (12) geführt ist.

3. Vorrichtung nach Anspruch 2, dadurch gekennzeichnet, daß die Ausschubstange (6) vor den Platten (4) auf einer auf das umlaufende Band (3) zeigenden schrägen Geraden (13) geführt ist.

4. Vorrichtung nach einem der Ansprüche 1 bis 3, dadurch gekennzeichnet, daß die Länge der Ausschubstange (6) einstellbar ist.

5. Vorrichtung nach einem der Ansprüche 1 bis 4, dadurch gekennzeichnet, daß der Abstand zwischen den parallel zueinander hängenden Platten (4) gleich der Breite der Verpackungseinheiten (1) ist.

6. Vorrichtung nach einem der Ansprüche 1 bis 5, dadurch gekennzeichnet, daß die Verpackungseinheiten (1) in den Bereich des umlaufenden Bandes (3) dort einlaufen, wo die sie von der Förderstrecke (2) herunterfördernde Platte (4) durch die Umlenkung am Ende des umlaufenden Bandes (3) noch schräggestellt ist.

## Claims

1. Apparatus for grouping already packed package units (1) for a larger transport assembly, in which several packs (1) are arranged next to each other, said apparatus having an endless running belt (3) at the end of a feed conveyor (2), which advances the units (1) singly, which belt moves the units (1) off the feed conveyor (2) by means of plates (4) attached to the belt (3) and from which belt (3) a predetermined number are removed perpendicularly to the feed direction of the belt in the same conveying plante and carried away on a take-off conveyor (5), characterised by the following features :

a) the belt (3) is arranged above the advanced package units (1) ;

b) the plates (4), inclined downwards, convey the units (1) off the feed conveyor (2) ;

c) a space (7) is provided between the plates (4) and a floor (8) below the plates (4) which carries the units (1) ;

d) the take-off conveyor (5) extends at an angle to the direction of movement of the plates (4) ;

e) a push-out rod (6) extends into the space (7) from the side of the plates (4) facing away from the take-off conveyor (5) and pushes the units (1) onto the take-off conveyor (5) ;

f) the belt (3) and the push-out rod (6) are driven continuously ;

g) the end of the push-out rod (6) has practically no relative speed in relation to the operative portion of the belt (3) in its longitudinal direction whilst pushing the packs (1) out.

2. Apparatus according to claim 1, characterised in that the push-out rod (6) has a constant length, is arranged on an endless belt (11) aligned parallel to the take-off conveyor (5) and is guided along a straight line (12) inclined to the direction of movement of the take-off conveyor (5) and pointing away from belt (3) during its pushing action.

3. Apparatus according to claim 2, characterised in that in front of the plates (4), the push-out rod (6) is guided along a sloping straight line (13) inclined towards the revolving belt (3).

4. Apparatus according to one of claims 1 to 3, characterised in that the length of the push-out rod (6) is adjustable.

5. Apparatus according to one of claims 1 to 4, characterised in that the distance between the plates (4) suspended in parallel is equal to the width of the units (1).

6. Apparatus according to one of claims 1 to 5, characterised in that the units (1) enter the area of the belt (3) at a place where the plate (4) conveying them downwards away from the feed conveyor (2) is still at an angle due to the revolving belt (3) turning around at the end.

## Revendications

1. Dispositif pour grouper des emballages unitaires (1), déjà réalisés en soi, en un colis plus important où plusieurs emballages unitaires (1) sont disposés côte à côte, et comportant une bande sans fin en rotation (3) à l'extrémité d'une voie d'acheminement (2) apportant individuellement les emballages unitaires (1), ladite bande (3) enlevant lesdits emballages (1) de cette voie (2) au moyen de plaques (4) fixées à cette bande (3), et de laquelle ressort une quantité prédéterminée desdits emballages perpendiculairement à la direction d'avance de cette bande dans le même plan d'acheminement, ceux-ci étant ensuite emportés sur une bande d'évacuation (5), caractérisé par les particularités suivantes :

a) la bande sans fin en rotation (3) est disposée au-dessus des emballages unitaires (1) arrivants ;

b) les plaques (4) font descendre les emballages unitaires (1) de la voie d'acheminement (2) les apportant ;

c) un espace intermédiaire (7) se trouve entre les plaques (4) et un plateau (8) situé au-dessous des plaques (4) qui porte les emballages unitaires (1) ;

d) la direction d'avance de la bande d'évacuation (5) fait un angle avec la direction du mouvement des plaques (4);

e) une barre d'expulsion (6) se déplace dans l'espace intermédiaire (7) du côté des plaques (4) opposé à la bande d'évacuation (5) sur laquelle ladite barre (6) pousse les emballages unitaires (1) ;

f) la bande sans fin en rotation (3) et la barre d'expulsion (6) sont actionnées de façon continue ;

g) l'extrémité de la barre d'expulsion (6), pendant le dégagement des emballages unitaires (1), ne présente pratiquement pas de vitesse relative par rapport à la partie active de la bande sans fin en rotation (3), dans son sens longitudinal.

2. Dispositif selon la revendication 1, caractérisé en ce que la barre d'expulsion (6) présente une longueur constante, est disposée sur une bande sans fin en rotation (11) alignée parallèlement à la bande d'évacuation (5), et est guidée pendant le dégagement par une droite (12) allant en s'écartant de la bande sans fin en rotation (3) obliquement par rapport à la direction de déplacement de la bande d'évacuation (5).

3. Dispositif selon la revendication 1, caractérisé en ce que la barre d'expulsion (6) est amenée devant les plaques (4) par une droite oblique (13) se dirigeant vers la bande sans fin en rotation (3).

4. Dispositif selon l'une des revendications 1 à 3, caractérisé en ce que la longueur de la barre d'expulsion (6) est ajustable.

5. Dispositif selon l'une des revendications 1 à 4, caractérisé en ce que l'écartement entre les plaques (4) suspendues parallèlement entre elles est égal à la largeur des emballages unitaires (1).

6. Dispositif selon l'une des revendications 1 à 5, caractérisé en ce que les emballages unitaires (1) pénètrent dans le domaine de la bande sans fin en rotation (3) à l'endroit où la plaque (4) s'abaissant vers la voie d'acheminement (2) est encore en position oblique en raison du basculement à l'extrémité de la bande sans fin en rotation (3).